Europäisches Patentamt

European Patent Office

Office européen des brevets

(11) Publication number: 0 063 126
B1

# EUROPEAN PATENT SPECIFICATION

(45) Date of publication of patent specification: 25.09.85

(21) Application number: 81902800.2

(22) Date of filing: 22.10.81

(86) International application number:
PCT/GB81/00231

(87) International publication number:
WO 82/01631 13.05.82 Gazette 82/12

(51) Int. Cl.⁴: **H 04 J 15/00, H 04 B 9/00,
G 02 B 6/24**

(54) OPTICAL TRANSMISSION SYSTEMS.

(30) Priority: 23.10.80 GB 8034236

(43) Date of publication of application:
27.10.82 Bulletin 82/43

(45) Publication of the grant of the patent:
25.09.85 Bulletin 85/39

(84) Designated Contracting States:
DE FR NL SE

(56) References cited:
EP-A-0 028 751
EP-A-0 037 787
CA-A-1 089 932
US-A-3 845 294
US-A-3 953 727
US-A-4 198 117

Applied physics Letters, volume 31, no. 3,
issued August 1977, (New York, US), W.J.
Tomlinson: "Optical multiplexer for multimode
fiber transmission systems", pages 169 to 171
G.R. HARRISON: "Practical Spectroscopy",
1948, Prentice Hall (New York, US), sections
17.2 and 17.3, pages 477 to 484, see figure 17.1

(73) Proprietor: PLESSEY OVERSEAS LIMITED
Vicarage Lane
Ilford Essex IGI 4AQ (GB)

(72) Inventor: CARTER, Andrew Cannon
11 Windmill Way
Greens Norton Towcester NN12 8BZ (GB)
Inventor: GOODFELLOW, Robert Charles
1, Octavian Way
Brackley Northamptonshire NN 13 5HX (GB)

(74) Representative: Field, Howard John
The Plessey Company plc Beeston
Nottingham, NG9 1LA (GB)

Courier Press, Leamington Spa, England.

## Description

This invention relates to optical transmission systems and more particularly to optical transmission systems for the multiplexed transmission of different wavelengths of light.

In this specification the term "light" also includes light invisible to the human eye including infra-red and ultra-violet radiation.

Multiplexing a number of light signals enables a single optical fibre to carry a plurality of different signals, a demultiplexer of similar design to the multiplexer being used to separate the signals at the other end of the fibre. The advantages of optical fibres over electrical conductors are well known, being more efficient, carrying much higher frequencies and enabling far fewer repeater stations to be employed. They are also unaffected by external electro-magnetic radiation.

An optical transmission system for the multiplexed transmission of light is known in accordance with the prior art portion of Claim 1 (US Patent No: 3953727) in which ten light emitting diodes each emitting a different emission spectral line in the near infra-red are used in conjunction with selective mirrors which only reflect radiation within a narrow frequency band. Lenses focus the spectrum of each diode on to the end of an optical fibre. A similar series of lenses and selective mirrors is used in the demultiplexer to separate the signals and focus them on to ten photodetectors.

A similar system is disclosed in Applied Physics Letters, Vol 31, No: 3, pages 169 to 171. Light enters a demultiplexer from an input fibre and is collimated by a GRIN-rod lens before striking a grating. The GRIN-rod lens splits the light into different wavelength components which are reflected by the grating at different angles and these pass back through the lens and are focussed on to a number of output fibres. The device can also be used in reverse as a multiplexer.

The former system is quite complex and bulky with ten light emitting diodes, ten selective mirrors and ten lenses in both the multiplexer and the demultiplexer and each wavelength component must pass through ten mirrors from the multiplexer to the demultiplexer. This has the effect of substantial attenuation of each wavelength component. Both systems also use different wavelength producing diodes.

The invention claimed provides an optical transmission system which has a high radiance and efficiency, high degrees of optical isolation between wavelengths, is rugged and compact and is capable of transmitting more wavelength components than the prior art. This is achieved by using an array of displaced diode elements, the elements having broad emission spectra centred on the same wavelength. The displacement produces overlapping spectrum images on a surface and an optical fibre receives a portion only of each image, each portion being a different part of the spectrum image emitted by each of the diode elements. A number of such arrays may be used, the diode elements of each array being centred on a different wavelength. For example nine arrays could be used, each array having seven diode elements giving a 63 channel wavelength multiplex system over a single fibre.

Embodiments of the invention will now be described by way of example only with reference to the accompanying drawings in which:

Figure 1a and 1b illustrate schematically the principle of an optical transmission system for multiplexed transmission of light in accordance with the invention,

Figure 2 illustrates a practical arrangement of the transmission system and

Figure 3 is an alternative arrangement to that of Figure 2,

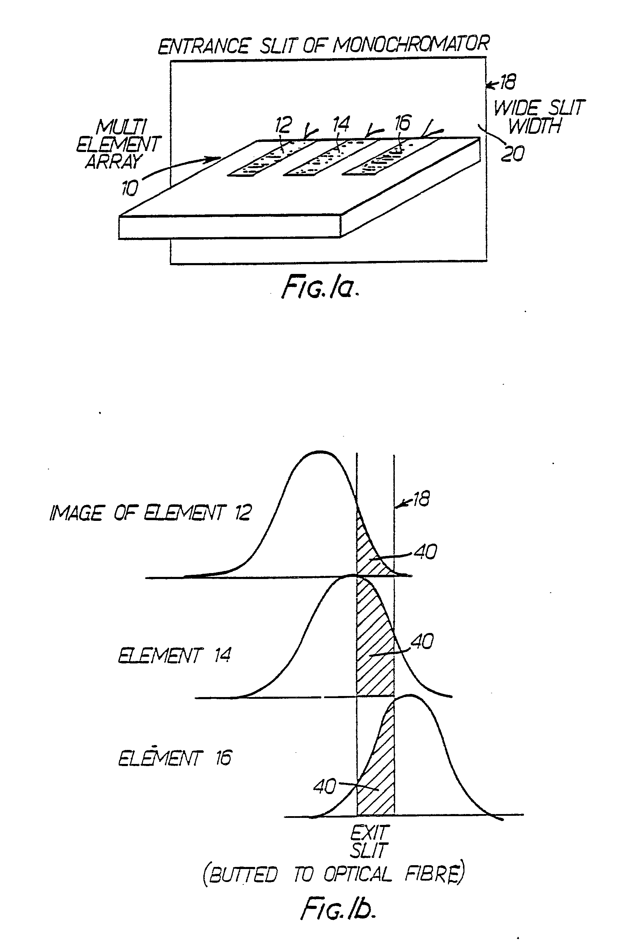

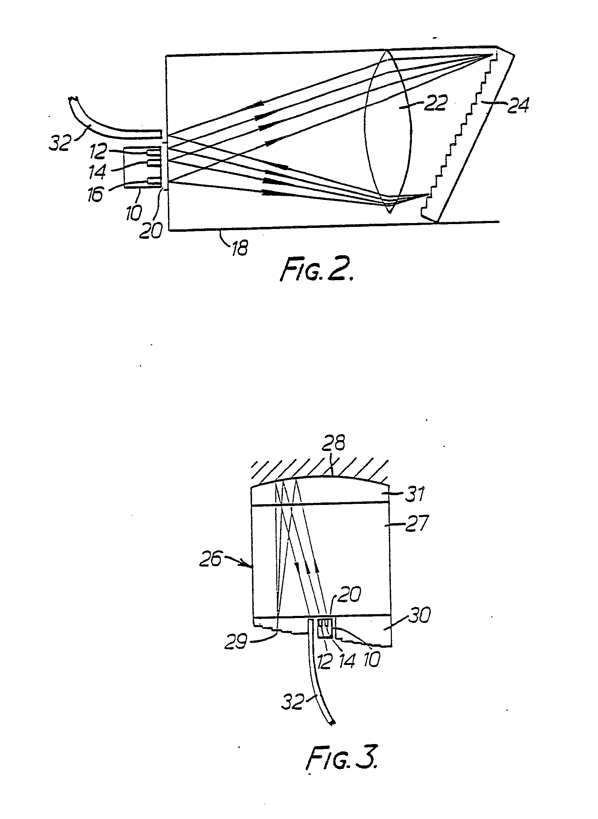

Figure 1a illustrates a multi-element array 10 of light emitting diodes (LED's), each element 12, 14 and 16 emitting a broad spectrum in wavelength and each element being centered on the same wavelength. The array 10 is positioned adjacent to a monochromator 18 having a wide entrance slit 20. The monochromator 18 is illustrated in Figure 2 and comprises a lens 22 and a dispersive element, in this case a blazed grating 24. The light from each element of the LED array is focussed by the lens 22 on to the grating 24 where it is defracted and reflected back through the lens 22 which focusses an image of the spectrum of each element adjacent to the LED array. Since the elements 12, 14 and 16 are located at different positions adjacent to each other, the three resulting spectrum images are slightly displaced from one another but overlap as illustrated in Figure 1b. Mounted in the side of the monochromator 18 is an optical fibre 32 the end of which is located in the area which receives the three overlapping spectrum images. Thus the optical fibre 32 receives three different channels 40 of each of the three spectrum images as illustrated in Figure 1b and the fibre then transmits these multiplexed channels. A similar monochromator (not shown) is also used at the other end of the fibre which demultiplexes the signals (the defraction at the grating is proportional to wavelength and the three multiplexed channels are therefore separated) in conjunction with a detector array.

The LED array 10 emits at high radiance and efficiency and the monochromator gives a very high degree of isolation (both optical and electrical) between the parts of the spectra transmitted along the fibre 32.

The monochromator 18 images at the high numerical aperture of multimode fibres (~0.2—0.3) with small aberrations and attenuation, has the correct dispersion characteristics and which is fabricated as a compact and rugged component.

The LED multi-element array 10 may be any of several material systems including lead-tin telluride, gallium phosphide, gallium arsenide, gallium arsenide phosphide, gallium-indium-arsenide-phosphide, gallium arsenide, and also double heterostructure gallium aluminium arsenide. The two latter material systems have many attractions for fibre optic applications.

One example of a gallium arsenide array is a zinc diffused surface emitting array comprising eight 25 × 100 μm² elements with 100 μm spacing between elements. In this case the individual elements are separated completely by chemical etching to give a very high degree of electrical and optical isolation but positional accuracy is maintained because of a continuous gold integral heatsink pad. Each element emits at radiances around 20 watts/st/cm² at current drives of 300 mA which corresponds to 1 mw output per element.

Another example is a 16 element edge emitting array which is fabricated in double hetero-structure GaAlAs material. This is a lower current device with a power output of 30 μw per element at a current of 30 mA. Each emission element is 20μm × 1μm in size.

The emitting dimensions for each element, and the number of elements for each array can be altered to suit system requirements.

With the correct type of lens 32 in the monochromator 18 diffraction limited optics are straight forwardly achieved and a high quality grating 24 used at the blaze angle will reflect at 90% efficiency. Thus low overall insertion loss is achievable with such a monochromator. This optical arrangement is set up in a 1 cm long metal tube and so is rugged and compact as well as optically efficient.

An alternative monolithic structure 26 is illustrated in Figure 3. In this case a concave reflector 28 is used in place of the lens 22 and a grating 29 is used as the dispersive element.

This optical structure consists of three optical parts:—

A body part 27, a reflector part 31 having the curved reflector 28 and a small angle prism 30 with a grating 29. This has the advantage of solid geometry, and as all the light rays are optically immersed any aberrations are smaller than for an equivalent free-space configuration. This structure can also be made in a thin plate wave-guide form which can be very small and manufactured in large quantities at relatively low cost.

In this case light diverging from each element 12 or 14 of the LED array 10 is collimated into a parallel beam by the reflector 28. It is diffracted at the grating 29 so that a slightly angled parallel beam is reflected towards the reflector 28 and is then re-imaged and adjacent to the LED array 10. As before the fibre 32 receives light from the variously displaced elements of the LED array thus launching different sections of the spectrum along the fibre 32 from each element.

The multiplexing scheme of Figure 1a creates multiple channels 40 shown in Figure 1b by cutting the spectral emission of each element 12, 14 or 16 into sections but various sophistications can be introduced to optimise the launch power.

With a surface emitter array, enhancement of coupled power by a factor of 10—20 can be achieved by fitting each element with a spherical microlens. Alternatively a 3—5 times improvement can be achieved by the use of a cylindrical lens (e.g. a glass fibre) which extends across all of the elements and this can be applied to both the edge and surface types of arrays.

The near gaussian spectral emission of LED's implies a corresponding variation in launch power for the different wavelength channels 40. This effect can be reduced by 'Element width tailoring' in which the end of the elements 12, 14, 16 of the array 10 are made proportionately wider so that the widths of the different channels 40 is not constant. Alternatively the current drive to the elements can be adjusted to level the launch powers.

Seven elements giving seven channels 40 (a minimum requirement for one specific application) can easily be driven from one LED array and this number can be multiplied by using other similar arrays with emission spectra centred at other wavelengths. A spectrum centred at a different wavelength can provide seven further different channels and LED arrays with wavelengths centred at 0.8 μm, 0.85 μm, 0.9 μm and 1.05 μm each with a bandwidth of 0.1 μm can be used. The channels can then be 0.80—0.85, 0.85—0.9, 0.9—0.95 and 0.95—1.0 and used with silicon arrays as detectors.

A further five LED arrays can also be used (GaInAsP/InP types) if long wavelength detector arrays are utilised. Thus potentially a 7 × 0 — 63 channel wavelength multiplex system can be operated over a single fibre.

**Claims**

1. An optical transmission system for the multiplexed transmission of light comprising a plurality of light emitting diodes (12, 14, 16) and means (22, 24) for forming an image of the spectrum of each diode on a surface (20), the end of an optical fibre (32) being positioned in the surface (20) such that at least a portion of each spectrum image is focussed on the end of and transmitted by the optical fibre (32) characterised in that the light emitting diodes comprise an array (10) of displaced diode elements (12, 14, 16) the elements of the array having broad emission spectra centred on the same wavelength, the displacement of the elements producing spectrum images which are displaced from one another on the surface (20) but in overlapping relationship, the end of the optical fibre (32) being positioned in the surface (20) such that a portion (40) of each of the spectrum images is focussed on the end of the optical fibre (32), each portion (40) being a different part of the spectrum image emitted by each of the diode elements (12, 14, 16).

2. An optical transmission system as claimed in claim 1 characterised in that the launch power for each portion (40) of the spectrum image received by the optical fibre (32) is substantially equalized.

3. An optical transmission system as claimed in claim 2 characterised in that the launch power for each portion (40) of the spectrum image is substantially equalized by varying the sizes of the elements (12, 14, 16) of the array.

4. An optical transmission system as claimed in claim 2 characterised in that the launch power for each portion (40) of the spectrum image is substantially equalized by adjusting the current drive to each light emitting diode element (12, 14, 16).

5. An optical transmission system as claimed in any preceding claim characterised by a plurality of arrays of light emitting diode elements (12, 14, 16), the elements in each array having emission spectra centred on the same wavelength which differs from the wavelengths on which the emission spectra of the elements of the other arrays are centred.

## Revendications

1. Système d'émission optique pour l'émission multiplexée de la lumière, comprenant plusieurs diodes photo-émettrices (12, 14, 16) et des dispositifs (22, 24) pour la formation d'une image du spectre de chaque diode sur une surface (20), l'extrémité d'une fibre optique (32) étant placée dans la surface (20) de telle sorte qu'au moins une portion de chaque image de spectre soit mise au point aur l'extrémité de la fibre optique (32) et transmise par elle, ce système étant caractérisé par le fait que les diodes photo-émettrices comprennent un ensemble (10) d'éléments de diodes déplacés (12, 14, 16), ces éléments ayant un spectre d'émission large centré sur la même longueur d'onde, le déplacement des éléments produisant des images de spectre qui sont déplacées de l'une à l'autre sur la surface (20) mais dans un rapport de chevauchement, l'extrémité de la fibre optique (32) étant placée sur la surface (20) de telle façon qu'une portion (40) de chacune des images du spectre soit mise au point sur l'extrémité de la fibre optique (32), chaque portion (40) étant une partie différente de l'image de spectre émise par chacun des éléments de diode (12, 14, 16).

2. Système d'émission optique tel que décrit à la Revendication 1, caractérisé en cela que la puissance de lancement pour chaque portion (40) de l'image de spectre reçue par la fibre optique (32) est égalisée de façon importante.

3. Système d'émission optique tel que décrit dans la Revendication 2 caractérisé en cela que la puissance de lancement pour chaque portion (40) de l'image de spectre est égalisée de façon importante par variation des dimensions des éléments (12, 14, 16) de l'ensemble.

4. Système d'émission optique tel que décrit dans la Revendication 2, caractérisé en cela que la puissance de lancement pour chaque portion (40) de l'image de spectre est égalisée de façon importante par ajustement de l'entraînement de courant à chaque élément (12, 14, 16) des diodes photo-émettrices.

5. Système d'émission optique tel que décrit dans toute revendication précédente caractérisé par plusieurs ensembles d'éléments de diodes photo-émettrices (12, 14, 16), les éléments de chaque ensemble possèdant des spectres d'émission centrés sur la même longueur d'onde qui diffère des longueurs d'onde sur lesquelles les spectres d'émission des éléments d'autres ensembles sont centrés.

## Patentansprüche

1. Optisches Übertragungssystem für die Mehrfachübertragung von Licht, bestehend aus einer Mehrzahl von Leuchtdioden (12, 14, 16) und Mittel (22, 24) für die Abbildung des Spektrums jeder Diode auf einer Fläche (20), wobei das Ende einer Lichtleitfaser (32) derart in der Fläche (20) positioniert wird, so daß zumindest ein Teil jeder Abbildung des Spektrums auf das Ende der Lichtleitfaser (32) fokussiert und von dieser übertragen wird, dadurch gekennzeichnet, daß die Leuchtdioden aus einer Gruppe (10) von versetzten Diodenelementen (12, 14, 16) besteht, wobei die Elemente der Gruppe breite, auf die gleiche Wellenlänge zentrierte Emissionsspektren haben, wobei die versetzte Anordnung der Elemente Bilder von Spektren erzeugt, welche auf der Fläche (20) voneinander versetzt, jedoch in einem überlappenden Verhältnis liegen, wobei das Ende der Lichtleitfaser (32) derart in der Fläche (20) positioniert ist, daß ein Teil (40) jedes Spektrumbildes auf das Ende der Lichtleitfaser (32) fokussiert ist, wobei jedes Teil (40) ein verschiedenes Teil der von jedem der Diodenelemente (12, 14, 16) emittierten Spektrumbildes ist.

2. Ein optisches übertragungssystem nach Anspruch 1, dadurch gekennzeichnet, daß die Übertragungskraft für jeden Teil (40) des von der Lichtleitfaser (32) empfangenen Strombildes im wesentlichen ausgeglichen wird.

3. Ein optisches Übertragungssystem nach Anspruch 2, dadurch gekennzeichnet, daß die Übertragungskraft für jedes Teil (40) des Spektralbildes im wesentlichen durch den Größenunterschied der Elemente (12, 14, 16) der Gruppe ausgeglichen wird.

4. Ein optisches Übertragungssystem nach Anspruch 2, dadurch gekennzeichnet, daß die Übertragungskraft für jedes Teil (40) des Spektralbildes im wesentlichen durch Justierung des Antriebsstroms für jedes Leuchtdiodenelement (12, 14, 16) ausgeglichen wird.

5. Ein optisches Übertragungssystem nach einem der vorhergehenden Ansprüche, durch eine Mehrzahl der Gruppen von Leuchtdiodenelementen (12, 14, 16) gekennzeichnet, wobei die Elemente in jeder Gruppe Emissionsspektren haben, die auf eine gleiche Wellenlänge zentriert sind, wobei diese Wellenlänge jedoch von derjenigen auf welche die Emissionsspektren der Elemente der Gruppen zentriert sind, abweicht.

ENTRANCE SLIT OF MONOCHROMATOR

*Fig. Ia.*

IMAGE OF ELEMENT 12

ELEMENT 14

ELEMENT 16

EXIT
SLIT
(BUTTED TO OPTICAL FIBRE)

*Fig. Ib.*

**FIG. 2.**

**FIG. 3.**